# EUROPEAN PATENT SPECIFICATION

(11) **EP 0 443 783 B1**
(45) Date of publication and mention of the grant of the patent: **23.11.1994**
(21) Application number: 91301230.8
(22) Date of filing: 15.02.1991
(51) Int. Cl.: H04N 1/028

(54) **Image scanning apparatus**
Bildabtastgerät
Appareil de balayage d'image

(30) Priority: 20.02.1990 GB 9003782
(43) Date of publication of application: 28.08.1991
(73) Proprietor: CROSFIELD ELECTRONICS LIMITED, Hemel Hempstead Hertfordshire HP2 7RH (GB)
(72) Inventor: Yeadon, Edward Christopher, London, W2 6AW (GB)
(74) Representative: Skone James, Robert Edmund

(56) References cited:
- EP-A- 0 049 048
- EP-A- 0 142 833
- US-A- 4 778 994
- US-A- 4 880 987

## Description

The invention relates to image scanning apparatus for scanning images so as to generate an electrical representation of the image. Examples of such apparatus include flat-bed facsimile scanners.

Facsimile readers scan the area of a transparent film with a spot of light, and frequently collect light which is reflected from a sheet of diffuse white paper immediately underneath the film. This arrangement uses a common approach for both films and paper originals, which may be bromide paper, Opaline or similar, and are often "pasteups" mounted on a stiff backing board. Effectively, the film is converted into a reflection-copy original by putting a diffuse white underlay sheet in close contact with the emulsion.

The reflected light contrast from such a composite has two severe drawbacks:
1) light is reflected from the back of the film even in the black areas and degrades signal contrast from a possible 10000:1 (transmission density 4.0) or more with transmitted light, to less than 100:1 (relection density < 2.0).
2) in screened image areas the reflected light is attenuated by the Yule-Nielsen effect with light spreading in the backing sheet and being absorbed by the film emulsion. J.A.C. Yule and W.J.Nielsen. TAGA Proceedings, 3, 65 (1975). The Yule-Nielsen effect is a well known nonlinearity which has been characterised for ink on paper, but is much stronger and less predictable for film emulsion placed in contact with the white paper.

The result is that the reflected light signal contrast is reduced particularly in dark "shadow" regions of the screened image. This would give an incorrect tone response characteristic to the facsimile system unless it were corrected with an inverse nonlinearity. This in turn can be harmful to the performance of the scanner, particularly when "grey-level" data has to be collected as in descreening or low-moire facsimile applications.

Using a glass platen to support the film on the scanning table and collecting the light transmitted by the clear areas is possible. Disadvantages are that the guide rails and lead screw for the scanning table must be moved farther away from the table to allow the collecting optics to be placed underneath, and they are not then in the best position to move the assembly. Also, the table itself becomes merely a frame to support the glass platen and does not have the required rigidity for the acceleration forces associated with rapid stop/start operation.

US-A-4778994 describes a new type of apparatus in which a strip, light guide is provided under the image support extending in the direction of scanning movement of the light beam. Light passing through the image is coupled into the light guide and then is guided through the light guide to detectors at either end. This has a number of significant advantages in that the detectors are placed in laterally off-set positions relative to the image support allowing scanning movement relatively easily to take place. This does not avoid the need for a glass platen in the support table, to allow the scanning light beam to pass through the image and enter the light guide.

In accordance with the present invention, image scanning apparatus comprises radiation guide means on which a transparency bearing an image is positioned in use; irradiating means for irradiating the image on the support with a radiation beam whereby radiation passing through the transparency is coupled into the radiation guide means; and detection means positioned to detect radiation guided by the guide means to an edge of the guide means, the arrangement being such that in use relative scanning movement is caused between the beam and the image whereby a scan region is irradiated in a series of scan lines, characterized in that the radiation guide means is in the form of a sheet having major dimensions corresponding at least to the scan region.

We have devised a modified form of image scanning apparatus which deals with the particular problems associated with US-A-4778994. The invention enables a much more robust construction of the image support and associated drive system to be achieved and has a particular advantage that existing apparatus can be modified to incorporate the new feature without having to rebuild the image support and drive/suspension itself. The radiation guide means is simply placed on the support of an existing scanner.

Preferably, the radiation guide means comprises a plastics sheet and in the preferred example, the sheet fluoresces in response to incident radiation. For example, the radiation beam may constitute blue light while the radiation guide means fluoresces in response to absorption of that blue light in the yellow/orange band.

Although a single detector such as a photodiode, could be provided to detect radiation guided by the guide means, preferably there are at least two detectors positioned to detect radiation exiting from opposed edges of the radiation guide means.

An example of a flat-bed scanner according to the invention will now be described with reference to the accompanying drawings, in which:-
Figure 1 is a partial cross-section through the bed of the scanner; and,
Figure 2 is a partial plan of the bed.

The flat-bed scanner shown in the drawings is modified from a conventional flat-bed scanner and those parts of the scanner which are conventional will not be described in detail. The bed itself comprises a metal support table 1 which conventionally supports directly a film transparency and white paper backing sheet 2. A light beam 3 is caused to scan across the transparency 2 while the table 1 tracks in a direction orthogonal to the scanning direction so that the image is scanned in a series of parallel scan lines. Conventionally, light reflected from the transparency is detected, digitized and stored.

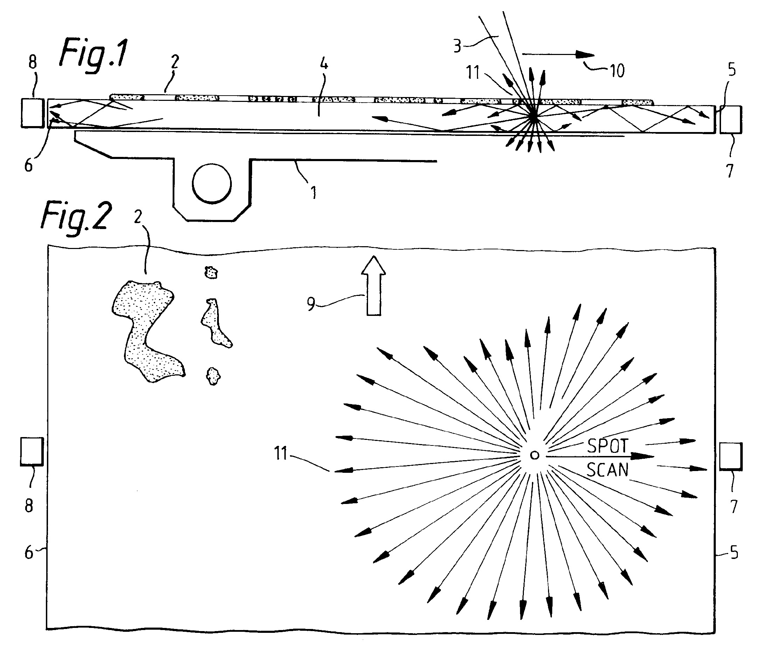

In this example of the invention, however, a plastics sheet 4 is interposed between the transparency 2 and the table 1. As can be seen in Figure 2, the composite film and plastics sheet 2 extends over the entire surface of the metal table 1. A suitable plastics is made by Bayer with the trade name "LISA". This absorbs strongly at 488 nm, so an Argon Ion Laser is needed for the primary scanning beam 3 which is focussed to a spot at the film. A thickness of 2 mm of LISA is enough to absorb virtually all the blue light. The absorbed blue light causes the plastic to fluoresce in the yellow/orange band, the fluorescent light being emitted in all directions from the point of absorption. Fluorescent light emitted substantially normal to the plane of the plastic sheet will leave the plastic and is likely to be absorbed by something else in the vicinity, like the metal table or the film transparency. This light is considered lost to the measuring system. Fluorescent light which is emitted substantially in the plane of the plastic sheet (within the critical angle of incidence for total internal reflection) will be confined or guided within the plastic sheet and proceed in all directions in the plane of the sheet as shown in Figure 2 (11). Some of this light will arrive at the edges of the plastic sheet 5,6.

At each edge 5,6 a silicon detector 7,8 is provided which is responsive to incident light in the yellow/orange band to generate an electrical signal representing the intensity of the incoming light, the electrical signals being fed to a processor (not shown).

The advantage of using this plastics material which fluoresces in the yellow/orange band is that this band is well matched to the spectral sensitivity of cheap silicon detectors. Furthermore, the decay time of the fluorescence is only a few nanoseconds which is suitable for the data rate of about 10 MHz. In addition, a) it enables the scanning laser beam to be used to emit light within the angular range for capture by total internal reflection within the sheet or underlay. Otherwise, it would be necessary to introduce some scattering mechanism (e.g a finely ground or white painted bottom surface of the underlay). As this scattering surface would have to cover the whole underside of the sheet, it would continually re-scatter the guided waves instead of totally internally reflecting them. The collection efficiency would be much reduced, particularly in the middle of scan.

b) The light detectors can be filtered only to pass the yellow or orange fluorescent light, and exclude the blue scanning beam. Any light scattered by the film before passing through it will not be detected. The signal contrast between clear areas and black areas on the film will be much greater as only transmitted light can cause fluorescence, and only the fluorescenct light can be detected.

The amount of light or radiation collected will be greatest when the scanning spot is close to the edge of the plastics sheet 4 and the associated detector, and least when it is furthest away from the edge. If there was only one detector then this would give a very uneven response. By using two detectors 7,8 and adding their outputs together, a much improved result is achieved. This will give an output which is highest at the two ends of the scan and lowest in the middle. If further levelling is needed, the intensity of the blue scanning laser beam 3 can be altered with an acousto-optic or other modulator as it sweeps from one side to the other.

The advantages of this arrangement are that the signal contrast from scanning film originals will be much higher; the signal contrast will be much more uniform over the full half-tone range from highlight to shadow; and as a result of these two factors, much less signal conditioning will be needed for descreening and moire reduction. This will give improved picture quality. Further advantages are lower noise levels (no paper noise); it is still possible to use the scanner conventionally and collect reflected light from pasteups and the like; the design of the table is not compromised by a glass platen and can be made stiff and light using metal; and it is possible to modify existing machines to incorporate the invention. The direction of movement of the table is shown by the arrow 9.

## Claims

1. Image scanning apparatus comprising radiation guide means (4) on which a transparency (2) bearing an image is positioned in use; irradiating means for irradiating the image on the support with a radiation beam (3) whereby radiation passing through the transparency (2) is coupled into the radiation guide means (4); and detection means (7,8) positioned to detect radiation guided by the guide means to an edge (5,6) of the guide means, the arrangement being such that in use relative scanning movement is caused between the beam (3) and the image whereby a scan region is irradiated in a series of scan lines, characterized in that the radiation guide means (4) is in the form of a sheet having major dimensions corresponding at least to the scan region.

2. Apparatus according to claim 1, wherein the radiation guide means (4) comprises a plastics sheet.

3. Apparatus according to claim 2, wherein the sheet (4) fluoresces in response to incident radiation.

4. Apparatus according to claim 3, wherein the radiation beam (3) constitutes blue light and the radiation guide means (4) fluoresces in response to absorption of the blue light in a yellow/orange band.

5. Apparatus according to any of the preceding claims, wherein there are at least two detectors (7,8) positioned to detect radiation exiting from opposed edges of the radiation guide means (4).

## Patentansprüche

1. Bildabtastgerät, bei dem auf einer Strahlführungseinrichtung (4) ein Transparent (2) mit einem Bild aufgelegt wird, mit Belichtungsmitteln zum Belichten des Bildes mit einem Lichtstrahl (3), wobei der durch das Transparent (2) hindurchtretende Strahl in die Strahlführungseinrichtung (4) eintritt und mit Detektormitteln (7,8) zum Erfassen der von der Strahlführungseinrichtung zu einer Kante (5,6) der Führungseinrichtung geleiteten Strahlung, wobei die Anordnung so getroffen ist, daß im Betrieb eine relative Abtastbewegung zwischen dem Strahl (3) und dem Bild erfolgt, wodurch der Abtastbereich in einer Reihe von Abtastzeilen belichtet wird, dadurch gekennzeichnet, daß die Strahlführungseinrichtung (4) die Form eines Blattes aufweist, dessen größere Abmessungen mindestens dem Abtastbereich entsprechen.

2. Gerät nach Anspruch 1, bei dem die Strahlführungseinrichtung (4) ein Kunststoffblatt ist.

3. Gerät nach Anspruch 2, bei dem das Blatt (4) entsprechend der einfallenden Strahlung fluorisziert.

4. Gerät nach Anspruch 3, bei dem der Belichtungsstrahl (3) blaues Licht hervorruft und die Strahlführungseinrichtung (4) entsprechend der Absorption des blauen Lichtes in einem Gelb/Orange-Band fluorisziert.

5. Gerät nach einem der vorhergehenden Ansprüche, bei dem mindestens zwei Detektoren (7,8) angeordnet sind, um die von entgegengesetzten Kanten der Strahlführungseinrichtung (4) ausgehende Strahlung zu erfassen.

## Revendications

1. Appareil pour scanner des images, comportant un moyen (4) de guidage de radiation, sur lequel une diapositive (2) portant une image est placée en utilisation; des moyens d'irradiation pour irradier l'image présente sur le support, avec un faisceau (3) de radiation, la radiation traversant la diapositive (2) étant couplée à l'intérieur du moyen (4) de guidage de radiation; et des moyens de détection (7, 8) positionnés de manière à détecter la radiation guidée par le moyen de guidage vers un bord (5, 6) du moyen de guidage, l'agencement étant tel qu'en utilisation un déplacement relatif en vue de scanner est provoqué entre le faisceau (3) et l'image, grâce à quoi une région à scanner est irradiée en une série de lignes scannées, caractérisé en ce que le moyen (4) de guidage de radiation présente la forme d'une feuille dont les plus grandes dimensions correspondent au moins à la région à scanner.

2. Appareil selon la revendication 1, dans lequel le moyen (4) de guidage de radiation comporte une feuille en plastique.

3. Appareil selon la revendication 2, dans lequel la feuille (4) devient fluorescente en réponse à la radiation incidente.

4. Appareil selon la revendication 3, dans lequel le faisceau (3) de radiation est constitué de lumière bleue, le moyen (4) de guidage de radiation devenant fluorescent en réponse à l'absorption de la lumière bleue dans une bande jaune/orange.

5. Appareil selon l'une quelconque des revendications précédentes, dans lequel il existe au moins deux détecteurs (7, 8) positionnés de manière à détecter la radiation quittant des bords opposés du moyen (4) de guidage de radiation.
